# EUROPEAN PATENT APPLICATION

(11) **EP 4 741 202 A1**
(43) Date of publication of application: **13.05.2026**
(21) Application number: 25215396.0
(22) Date of filing: 12.11.2025
(51) Int. Cl.: B60K 35/21, B60K 35/22

(54) **VEHICLE INTERIOR ASSEMBLY HAVING A LIGHT-EMITTING PORTION**

(30) Priority: 12.11.2024 US 202418945492
(71) Applicant: Faurecia Interior Systems, LLC, Auburn Hills, MI 48326 (US)
(72) Inventor: PICCIN, Hugo, Auburn Hills, 48326 (US); BUCHHEIT, Stephane, Auburn Hills, 48326 (US)
(74) Representative: Lavoix

(57) **Abstract**

A vehicle interior assembly includes a non-visible display facing a surface configured to reflect an image appearing on the display toward an occupant area of a vehicle passenger cabin in which the assembly is installed. The assembly is configured to emit light directly from a light-emitting portion of the surface facing the occupant area. The vehicle interior assembly may include a panel that includes the surface. The panel may be at least partially transparent at the light-emitting portion. The panel may be at least partially transparent at an image-reflecting portion of the surface. The light-emitting portion and the image-reflecting portion may form a continuous planar surface. An icon may be formed when light is emitted from the light-emitting portion of the surface. The icon may be a warning icon.

## Description

### TECHNICAL FIELD

The present disclosure is related generally to vehicle interior assemblies and, more particularly, to vehicle interior assemblies presenting information or images to vehicle occupants.

### BACKGROUND

Vehicle interior assemblies commonly convey information to a driver and/or other vehicle occupants, such as vehicle speed, navigation information, HVAC settings, etc. In some cases, such information may be conveyed in a reflected image. In one example, FR3073053 discloses a heads-up display that projects informational images onto an interior surface of the windshield in the driver's field of view. Such displays have the advantage that the driver does not need to look down to a traditional instrument panel to check the vehicle speed, fuel level, etc. But images in the driver's field of view can also be distracting, and their visibility can be compromised in bright sunlight.

### SUMMARY

Embodiments of a vehicle interior assembly include a non-visible display facing a surface configured to reflect an image appearing on the display toward an occupant area of a vehicle passenger cabin in which the assembly is installed. The assembly is configured to emit light directly from a light-emitting portion of the surface facing the occupant area.

In various embodiments, the vehicle interior assembly includes a panel that includes the surface. The panel is at least partially transparent at the light-emitting portion.

In various embodiments, the panel is at least partially transparent at an image-reflecting portion of the surface.

In various embodiments, the light-emitting portion and the image-reflecting portion form a continuous planar surface.

In various embodiments, the panel is 50-75% transparent.

In various embodiments, the vehicle interior assembly includes a light-emitting layer arranged to emit light directly from the light-emitting portion of the surface. The light-emitting layer is at least partially transparent.

In various embodiments, the vehicle interior assembly includes a light-emitting diode (LED) that includes the light-emitting layer.

In various embodiments, the light-emitting portion of the surface is an upper portion of the surface closest to the display.

In various embodiments, an icon is formed when light is emitted from the light-emitting portion of the surface.

In various embodiments, the icon is a warning icon.

In various embodiments, light from the light-emitting portion of the surface appears at least twice as bright as the reflected image.

In various embodiments, a brightness of the display remains constant when light is emitted directly from the light-emitting portion of the surface.

In various embodiments, the display is a downward-facing display that displays the image in a direction toward a floor of the vehicle passenger cabin.

In various embodiments, the surface is oriented at a 10 to 80 degree angle with respect to the display.

In various embodiments, a vehicle instrument panel includes the vehicle interior assembly. The reflected image includes at least one of: a speedometer, a tachometer, an odometer, a temperature gauge, a fuel gauge, a turn indicator, a headlight indicator, a compass, a navigation map, or a gear indicator.

It is intended that any one or more of the above-listed features, along with any of the features in the figures and in the following description, can be combined in any technically feasible combination to define a claimed invention, except where features are mutually exclusive.

### BRIEF DESCRIPTION OF THE DRAWINGS

Illustrative embodiments will hereinafter be described in conjunction with the following figures, wherein like numerals denote like elements, and wherein:
FIG. 1 is a cross-sectional view of an example of a vehicle interior assembly; and
FIG. 2 is a front view of the vehicle interior assembly.

### DESCRIPTION OF ILLUSTRATIVE EMBODIMENTS

Described herein is a vehicle interior assembly that reflects an image from a non-visible display toward an occupant area of the vehicle. A portion of the surface that reflects the image is also able to directly emit light on-demand so that the viewer sees the reflected image and a secondary image, such as a warning light, coming from the same surface.

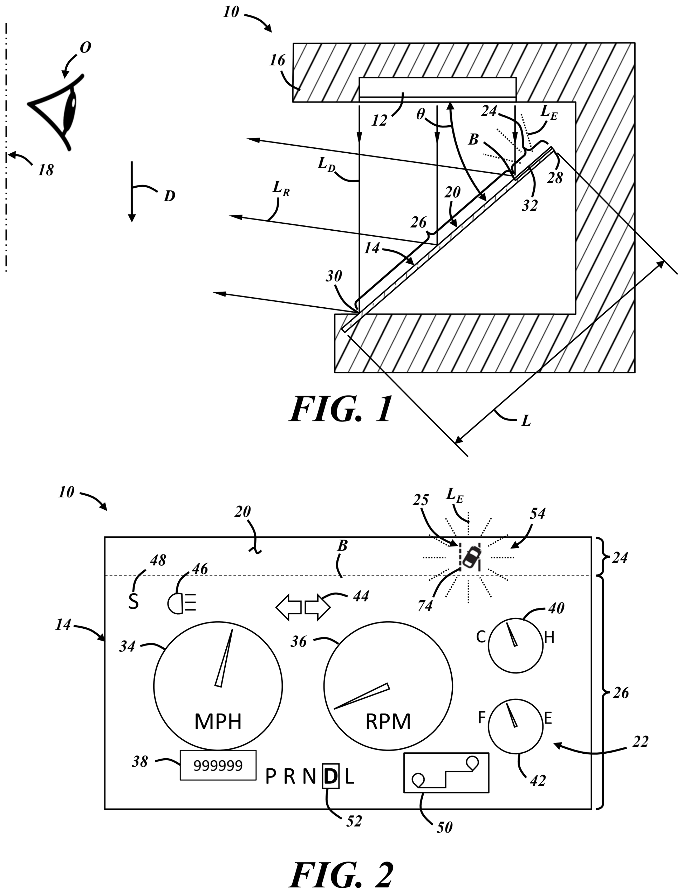

FIG. 1 is a cross-sectional view of an example of a vehicle interior assembly 10. The illustrated assembly 10 is embodied as a vehicle instrument panel of the type positioned just below the vehicle windshield that typically includes gauges and presents other vehicle-related information to the driver with only a quick glance downward. The following description is applicable to any vehicle interior assembly installed anywhere in a vehicle, such as on the passenger side of the vehicle interior, a rear seating area, a door, a ceiling, etc. The vehicle interior assembly 10 includes a display 12 and a panel 14 supported by a base 16. The base 16 provides the overall shape and structure of the illustrated instrument panel 10 and supports the display 12 and panel 14 in relative positions and orientations such that at least some of the light L_{D} from the display 12 is reflected from the panel and toward an occupant area 18 (e.g., a seating area) of the vehicle passenger cabin as reflected L_{R} light. The base 16 itself can be an assembly of multiple pieces.

In this example, a lower portion of the base 16 supports a proximal end of the panel 14, which extends upward and in a direction away from the occupant area 18 to a free end within a concave portion of the base. An upper portion of the base 16 supports the display 12 in a downward-facing orientation 12 above the panel 14 and out of view of an occupant O in the occupant area 18. More particularly, a partially reflective surface 20 of the panel 14 faces both the display 12 and the occupant area 18 and forms a non-zero angle θ with a light-emitting surface of the display 12 so that the occupant O in the occupant area 18 who has the interior assembly 10 within their field of view sees a reflected image 22-i.e., a reflection of an image appearing on the display 12. An example of the reflected image 22 in the form of an instrument cluster or driver information center is shown in FIG. 2. Where the panel 14 is partially reflective and partially transparent, the reflected image 22 appears to float within the concave portion of the base 16. This is because the inner surface of the concave portion of the base is visible through the panel 14 and because, since the image 22 is a reflection, its position relative to the surrounding assembly appears to move when the vehicle occupant moves their head. Housing the panel 14 within a concave portion of the base 16 also eliminates the brightness problem with conventional heads-up displays-i.e., the panel 14 is located in a shaded region of the assembly 10.

As discussed further below, the panel 14 and the panel surface 20 includes a light-emitting portion 24 from which light L_{E} can be directly emitted. Directly emitted light is non-reflected light that is locally generated from a non-luminous energy source, such as electricity. This means that both the reflected image 22 and a separately controllable and directly emitted image 25 can be presented together on the same surface 20 within the field of view of the vehicle occupant O. For example, the reflected image 22 may be presented to the vehicle interior during normal operating conditions, and the directly emitted image 25 may be presented on the same surface 20 only when a particular circumstance occurs, such as an anomalous or unsafe vehicle condition. The directly emitted image 25 of FIG. 2 is a lane-departure warning icon, and it can be presented brighter than the reflected image 22 to more easily get the vehicle occupant's attention. Further features and details of the vehicle interior assembly are discussed below.

The display 12 may be a typical flat-screen electronic display such as a liquid crystal display (LCD), an light-emitting diode (LED) display, a plasma display, or some other display directly emitting light to produce an image. The display 12 may also be a projector. In the illustrated example, the display 12 is a non-visible display, meaning that the light-emitting surface of the display cannot be seen by the vehicle occupant O when the occupant is location within the passenger cabin with the panel 14 in their field of view (e.g., sitting in a normal, upright position in a vehicle seat in the occupant area 18 of the vehicle passenger cabin). In some embodiments, the non-visible display 12 is hidden from view from all occupants of the passenger cabin when they are seated in their normal upright positions or otherwise positioned (e.g., standing) within the vehicle passenger cabin as intended by the design of the vehicle. This does not mean the light-emitting surface of the display 12 is invisible from all angles. For example, a technician performing computer diagnostics from the floor of the passenger cabin may see the display 12.

The display 12 may be a downward-facing display that displays or projects an image in a direction D toward a floor of the vehicle passenger cabin. "Downward" is not limited to the light-emitting surface of the display 12 being exactly horizontal. The display 12 is downward facing if a surface normal from the light-emitting surface has a majority component directed toward the floor of the vehicle. In some cases, the display 12 faces a non-downward direction, such as upward or horizontally. For example, the display 12 may be upward-facing toward a mirror or other reflective surface positioned above the panel 14 so that an image appearing on the display is reflected from the mirror to the panel 14 and from the surface 20 of the panel toward the occupant area 18. In the illustrated example, the image appearing on the display 12 may be reversed so the reflected image 22 is in the correct orientation to be viewed and understood by the vehicle occupant O.

As noted above, the surface 20 may be oriented at a non-zero angle θ with respect to the display 12. Advantageously, the surface 12 is oriented at an angle θ that allows the vehicle occupant to view the reflected image 22. The angle θ may be in a range from 10 to 80 degrees angle with respect to the display 12. In other embodiments, the surface 20 may be oriented at a 40-50 degree angle with respect to the display 12. Where the panel 14 is generally located at a vertical position below eye-level and the display 12 is facing directly downward, the angle θ may be greater than 45 degrees, such as between 50 and 75 degrees.

The panel 14 is at least partially transparent and includes the light-emitting portion 24 and an image-reflecting portion 26 of the surface 20. As used here, "partially transparent" is in reference to a physical characteristic of the panel 14 and means that a portion of the visible light L_{D} impinging the surface 20 (or the panel's opposite surface) passes through the material of the panel. "Partially transparent" is not in reference to a panel 14 with a transparent area along the surface 20 and an opaque area along the same surface-i.e., an opaque areal portion of the panel does not make an otherwise 100% transparent panel "partially transparent" as that term is used in this disclosure. Areas of the panel 14 or major surfaces of the panel having different optical properties will be referred to as "areas." For example, the panel 14 may include an opaque area (e.g., a painted border) and a non-opaque area, where the non-opaque area includes the light-emitting portion 24 and the image-reflecting portion 26. Embodiments of the panel 14, including both the light-emitting portion 24 and the image-reflecting portion 26, may be 10-90% transparent, 50-75% transparent, or 60-70% transparent. In the example in the figures, an entire length L of the panel 14, excluding an end embedded in the substrate 16, is at least partially transparent and includes the light-emitting and image reflecting portions 24, 26 of the surface 20 on the side of the panel that is closest to the display 12. However, the these portions of the surface 20 do not need to extend along the entire length L of the panel 14

At least a portion of the surface 20 of the panel 14 is at least partially reflective. Here again, "partially reflective" is in reference to a physical characteristic of the surface 20 and means that a portion of the visible light L_{D} impinging the surface is reflected away from the surface. In the illustrated example, substantially the entire image-reflecting portion 26 of the surface 20 is both partially reflective and partially transparent. The image-reflecting portion 26 may be the portion of the surface 20 that reflects the image from the display 12. The ratio of transparency to reflectivity of the image-reflecting portion 26 may depend on the particular application. In one example, the image-reflecting portion 26 is 30-40% reflective and the same area of the panel is 60-70% transparent. Reflectivity and transparency do not necessarily add to 100%, as some light may be absorbed or internally reflected by the panel 14. At least the image-reflecting portion 26 of the 14 panel may comprise or be formed a material having over 90% transparency, such as glass or clear plastic (e.g., polycarbonate or acrylic), and the surface 20 may be processed to enhance reflectivity, via deposition of a partially reflective coating, polishing, and/or being molded in a highly polished mold. Embodiments of the panel 14, including the light-emitting portion 24 and the image-reflecting portion 26, may be formed from the same transparent or partially transparent base material with at least the image-reflecting portion 26 being processed for enhanced reflectivity and the light-emitting portion being processed or configured to produce and emit light. It is also noted that, while the panel 14 in the illustrated example is a part of an instrument panel, this is not always the case. The panel 14 can be located anywhere in the vehicle and could, for example, be a windshield or other glass component configured to have a light-emitting portion 24 and an image-reflecting portion 26.

In the illustrated example, the light-emitting portion 24 and the image reflecting portion 26 of the surface 20 are two distinct areas of the surface and lie adjacent each other along a boundary B with each portion 24, 26 performing a distinct function: reflecting an image appearing on the display 12 or directly emitting light. The boundary B may be substantially non-visible to the vehicle occupant O. For example, the transparency of the panel 14 at each portion 24, 26 of the surface may be approximately the same-e.g., one transparency may be 5% higher or lower than the other. In this case, the image-reflecting portion 26 is not light-emitting, meaning that no light originates from the panel 14 at the image-reflecting portion 26 of the surface 20. Instead, the image-reflecting portion 26 may be configured only to reflect light or allow light to be transmitted through the panel 14, not generate light. In the example in the figures, the light-emitting portion 24 is an upper portion of the surface 20 along an upper edge 28 of the panel 14, closest to the display 12, and the image-reflecting portion 26 is a lower portion extending from the boundary B to a lower edge 30 or where the panel 14 meets the substrate 16, farthest from the display. Both portions 24, 26 in this example span an entire width of the panel 14. In this configuration, with the light-emitting portion 24 positioned higher than the image-reflecting portion 26 as part of an instrument panel, a warning light or icon produced by the light-emitting portion 24 is closer to the center of the vehicle occupant's field of view when the occupant is looking at the road ahead of the vehicle.

This is however only one example of the relative positions of the light-emitting and image reflecting portions 24, 26 of the surface 20. The light-emitting portion 24 can be any areal portion of the surface 20. The light-emitting portion 24 may preferably be along a perimeter of a non-opaque portion of the panel 14, such as the upper edge 28, lower edge 30, left or right edges, or along a portion of a curved edge. Such locations can make the boundary B less noticeable than if the light-emitting portion 24 was in a vertically central area of the panel 14 because, as discussed further below, the light-emitting portion may have additional layers affecting its transparency and/or reflectivity and may appear as less-transparent band spanning the panel. It is, however, possible that the light-emitting and image-reflecting portions 24, 26 partially or fully overlap, or that there is more than one image-reflection portion 26 on opposite sides of a light-emitting portion. For instance, the light-emitting portion 24 may include a reflective coating and/or may reflect at least a portion of the light L_{D} from the display 12 toward the vehicle occupant O. The image-reflecting portion 26 may include at least 50% of the total surface 20, at least 70% of the total surface, or at least 80% of the total surface, with the remainder of the exposed surface being the light-emitting portion 24.

The vehicle interior assembly 10 may include a light-emitting layer 32 arranged to emit light L_{E} directly from the light-emitting portion 24 of the surface 20. The light-emitting layer 32 may produce light when a voltage is applied across the layer 32. The light-emitting layer 32 may be part of a light-emitting diode (LED), for example, and layered between separate electrode layers. In one embodiment, the light-emitting layer 32 is part of an organic light-emitting diode (OLED), including the light-emitting layer 32 disposed between and in contact with first and second transparent electrode layers. Advantageously, the light-emitting portion 24 of the surface 20 may only emit light when a voltage is applied across the light-emitting layer 32. If no voltage is applied, the light-emitting portion 24 may not emit any light. For example, the light-emitting portion 24 may not have a glow in dark environments. One advantage of an OLED at the light-emitting portion 24 is the absence of a liquid-crystal layer and backlighting, as with some displays. A thin-film OLED may have a transparency between 35-85%. The light-emitting layer 32 of an LED and its opposite electrode layers can be laminated between thin-film transparent plastic layers (e.g., PET), between the base material of the panel 14 and a transparent layer, or embedded in the base material of the panel.

In an OLED, the light-emitting layer 32 is composed of electroluminescent polymers or organic electroluminescent small molecules. OLEDs have not been widely adopted in automotive display applications, because the organic composition of the light-emitting layer 32 has a relatively short lifespan compared to inorganic semiconductor-based LEDs-i.e., organic materials break down over time with continuous use. However, the intermittent nature of the light-emitting portion 24 of the presently disclosed assembly-e.g., where the light-emitting portion is illuminated only in situations where information must be communicated urgently to the vehicle occupant-enables OLED use because the light-emitting portion is not continuously illuminated and is illuminated in relatively uncommon situations. The disclosed vehicle interior assembly 10 is able to take advantage of the strengths of an OLED, such as high transparency and thin profile, while avoiding OLED weaknesses, such as a relatively short service life.

As shown in FIG. 1, the light-emitting portion 24 and the image-reflecting portion 26 may form a continuous and/or planar surface 20, where "continuous" means a surface without a discontinuity or an abrupt change in slope. The light-emitting portion 24 may abut the image-reflecting portion 26 such that the two portions 24, 26 are next to one another along the boundary B. The transition between the light-emitting portion 24 and the image-reflecting portion 26 may be smooth and/or flat without any curvature or change in level between the two portions. For example, where an LED is employed at the light-emitting portion 24, the light-emitting layer 32 may be beneath the surface 20. A thin-film OLED may be laminated along the back side of the panel 14 or within the thickness of the panel 14, for example. A smooth, continuous transition between the two portion 24, 26 of the surface helps make the presence of the light-emitting portion 24 non-visible or at least less visible.

The light L_{E} from the light-emitting portion 24 of the surface 20 may appear at least twice as bright as the reflected image 22, an example of which is shown in FIG. 2. Brightness refers to the amount of visible light coming from a unit surface area of an object and may be measured in lux. In some embodiments, the light from the light-emitting portion 24 of the surface 20 may appear at least three times as bright as the reflected image 22. In a specific example where the image-reflecting portion 26 of the surface 20 of the panel 14 is 30% reflective and 70% transparent, the brightness of the light-emitting portion 24 is over three times more than that of the image-reflecting portion 26, even when the light L_{D} from the display 12 and the light L_{E} from the light-emitting portion 24 have the same brightness. The light-emitting portion 24 may convey information to a vehicle occupant 14 that is not necessary to display at all times, including, for example, a low tire pressure warning or lane-departure warning. Advantageously, light from the light-emitting portion 24 may appear brighter than the reflected image 22 to draw the vehicle occupant's attention to the information conveyed by the light-emitting portion 24 and to ensure that the information conveyed by the light-emitting portion 24 is not getting lost in information conveyed by the reflected image 22. This means the brightness of the display 12 may remain constant, or even be reduced, when light is emitted directly from the light-emitting portion 24.

FIG. 2 is a front view of the panel 14 of the vehicle interior assembly 10 from the perspective of the driver or other vehicle occupant O. As noted above, the assembly 10 and its two distinct image sources-the display 12 providing a reflected image 22 and the light-emitting portion 24 of the panel surface 20 providing a directly emitted image 25-can present both separately controllable images together on the same surface 20 within the field of view of the vehicle occupant O. The reflected image 22 may be presented to the vehicle interior during normal, steady-state operating conditions, and one or more directly emitted image 25 may be presented on the same surface 20 only when a particular circumstance occurs, such as an anomalous or unsafe vehicle condition. The directly emitted image 25 of FIG. 2 is a lane-departure warning icon, and it can be presented brighter than the reflected image 22 to more easily get the vehicle occupant's attention.

The reflected image 22 in FIG. 2 contains information that is typical for a vehicle instrument cluster or driver information center. The reflected image 22 is not limited to this, however. The surface 20 can reflect any image appearing on the display 12, including information-containing images, aesthetic images, entertainment images, etc., even as part of instrument panel 10 as shown. The reflected image 22 of FIG. 2 includes a speedometer 34, a tachometer 36, an odometer 38, a temperature gauge 40, a fuel gauge 42, a turn indicator 44, a headlight indicator 46, a compass 48, a navigation map 50, and a gear indicator 52. This list is of course non-limiting. The reflected image 22 may include other information that may be of use to the vehicle occupant O. The reflected image 22 may become visible to the vehicle occupant O when the vehicle is powered on and non-visible to the vehicle occupant when the vehicle is turned off. In fact, the panel 14 itself may be substantially non-visible to the vehicle occupant when display 12 and light-emitting portion 24 are off, such as when the vehicle is off.

A directly emitted image 25 may be formed when light L_{E} is emitted from the light-emitting portion 24 of the surface 20 and may be in the form of an icon 54. The icon 54 may be any symbol that conveys information to a vehicle occupant O other than a random pattern or collection of meaningless shapes. The icon 54 may be a symbol that is recognizable by a vehicle occupant O that represents a concept. For example, the icon 54 may be an exclamation point that a vehicle occupant O would recognize as a meeting notification. In other examples, the icon 54 may be a symbol of a telephone that a vehicle occupant O would recognize as an incoming phone call. The light-emitting portion 24 may display the icon 54 for a pre-determined period of time, until the occupant dismisses the icon, or until the need for the icon disappears. For example, an icon 54 representing a meeting may be displayed until the scheduled meeting time. In another example, an incoming phone call icon 54 may be displayed until the vehicle occupant 14 answers the phone or the phone stops ringing.

The icon 54 may be a warning icon. As used here, a "warning icon" 54 is a symbol that conveys information to a vehicle occupant O regarding the safety of the occupant or vehicle, or a vehicle malfunction. In some examples, the warning icon 54 may be a symbol of a vehicle with a symbol of a star that a vehicle occupant would recognize as a collision indicator. In this example, the vehicle occupant O is presented with a lane-departure warning icon 54. Other examples of warning icons 54 include low oil pressure, low fuel, low tire pressure, engine overheating, collision avoidance, check engine, check transmission, or service due icons. Such icons 54 may become non-visible when the vehicle is turned off. The light-emitting portion 24 may be configured to generate a plurality of different icons 54 at different locations along the surface 20, such as in a row along the upper portion of the panel 14, with each icon being separately controllable. Each icon 54 may be generated by a dedicated monochrome OLED with the light-emitting layer 32 in the desired graphic shape. Or pixels of light-emitting portion 24 may be selectively illuminated by an array or matrix of individually addressable pixels of the light-emitting layer 32 to form different icons at the same location along the light-emitting portion 24.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation. In addition, the term "and/or" is to be construed as an inclusive OR. Therefore, for example, the phrase "A, B, and/or C" is to be interpreted as covering all the following: "A"; "B"; "C"; "A and B"; "A and C"; "B and C"; and "A, B, and C."

## Claims

1. A vehicle interior assembly comprising a non-visible display facing a surface configured to reflect an image appearing on the display toward an occupant area of a vehicle passenger cabin in which the assembly is installed, wherein the assembly is configured to emit light directly from a light-emitting portion of the surface facing the occupant area.

2. The vehicle interior assembly of claim 1, further comprising a panel that includes the surface, wherein the panel is at least partially transparent at the light-emitting portion.

3. The vehicle interior assembly of claim 2, wherein the panel is at least partially transparent at an image-reflecting portion of the surface.

4. The vehicle interior assembly of claim 3, wherein the light-emitting portion and the image-reflecting portion form a continuous planar surface.

5. The vehicle interior assembly of any one of the preceding claims 2 to 4, wherein the panel is 50-75% transparent.

6. The vehicle interior assembly of any one of the preceding claims, further comprising a light-emitting layer arranged to emit light directly from the light-emitting portion of the surface, wherein the light-emitting layer is at least partially transparent.

7. The vehicle interior assembly of claim 6, further comprising a light-emitting diode (LED) that includes the light-emitting layer.

8. The vehicle interior assembly of any one of the preceding claims, wherein the light-emitting portion of the surface is an upper portion of the surface closest to the display.

9. The vehicle interior assembly of any one of the preceding claims, wherein an icon is formed when light is emitted from the light-emitting portion of the surface.

10. The vehicle interior assembly of claim 9, wherein the icon is a warning icon.

11. The vehicle interior assembly of any one of the preceding claims, wherein light from the light-emitting portion of the surface appears at least twice as bright as the reflected image.

12. The vehicle interior assembly of any one of the preceding claims, wherein a brightness of the display remains constant when light is emitted directly from the light-emitting portion of the surface.

13. The vehicle interior assembly of any one of the preceding claims, wherein the display is a downward-facing display that displays the image in a direction toward a floor of the vehicle passenger cabin.

14. The vehicle interior assembly of any one of the preceding claims, wherein the surface is oriented at a 10 to 80 degree angle with respect to the display.

15. A vehicle instrument panel comprising the vehicle interior assembly of any one of the preceding claims, wherein the reflected image includes at least one of: a speedometer, a tachometer, an odometer, a temperature gauge, a fuel gauge, a turn indicator, a headlight indicator, a compass, a navigation map, or a gear indicator.
